# FASCICULE DE BREVET EUROPEEN

(11) **EP 1 302 347 B1**
(45) Date de publication et mention de la délivrance du brevet: **15.11.2006**
(21) Numéro de dépôt: 02364036.0
(22) Date de dépôt: 19.09.2002
(51) Int. Cl.: B60J 1/20

(54) **Porte pour véhicule automobile à store intégré, store, enjoliveur et véhicule correspondants**
Motorfahrzeugtür mit integrierter Rolloeinrichtung, Rollo, Zierabdeckung und korrespondierendes Fahrzeug
Motor vehicle door with integrated roller blind, roller blind, decoration covering and corresponding vehicle

(30) Priorité: 12.10.2001 FR 0113235
(43) Date de publication de la demande: 16.04.2003
(73) Titulaire: WAGON SAS, 79300 Bressuire (FR)
(72) Inventeur: Jeuffray, Jean-Marie, 79300 Bressuire (FR); Faure, Stéphanie, 49300 Cholet (FR)
(74) Mandataire: Vidon, Patrice

(56) Documents cités:
- EP-A- 1 129 872
- DE-C- 3 617 427
- FR-A- 2 774 947
- US-A- 5 089 912
- US-B1- 6 305 738

## Description

Le domaine de l'invention est celui des véhicules automobiles, et plus précisément des portes, ou portières, de tels véhicules selon le préambule de la revendication 1. Plus précisément encore, l'invention concerne les portes incorporant, ou prévues pour pouvoir incorporer, un store d'occultation pouvant être déployé devant une surface vitrée.

De façon classique, une porte de véhicule comprend généralement une partie supérieure, essentiellement vitrée, et une partie inférieure, présentant à l'extérieur un panneau de carrosserie et à l'intérieur un panneau d'habillage. Entre les deux panneaux, on trouve notamment des éléments de structure, permettant de rigidifier la porte, et notamment le panneau extérieur de carrosserie (voir US-B-6 305 738). Le panneau intérieur d'habillage est généralement relativement souple, et se déforme lorsqu'une pression ou une traction lui est imposée.

On peut trouver également à l'intérieur de cette partie inférieure de la porte différents éléments, tels que des moyens d'actionnement (manuels ou motorisés) de la vitre, ainsi qu'un espace suffisant pour recevoir cette dernière,...

On a encore pensé à y loger un store d'occultation, ou plus précisément ses moyens d'entraînement et de stockage. Dans ce cas, une fente est ménagée dans la partie supérieure du panneau intérieur d'habillage, au travers de laquelle la toile peut être déployée pour occulter la vitre. Lorsque la toile est repliée, seule la barre de tirage, voire seulement un simple élément de préhension, reste visible. Le mécanisme est quant à lui dissimulé sous le panneau intérieur d'habillage, auquel il est fixé.

Pendant longtemps, les éléments de structure destinés à renforcer la porte ont compris des caissons, formés par une plaque de tôle définissant le caisson, dont les bords sont soudés au panneau extérieur de carrosserie. Dans ce cas, il restait suffisamment d'espace pour monter un store sous la partie supérieure du panneau intérieur, par exemple à l'aide d'une cassette pincée, dont les extrémités sont conçues pour venir chevaucher les bords de la fente.

Cette technique est encore utilisée régulièrement. Elle présente cependant un certain nombre d'inconvénients, liés notamment à la souplesse et à la fragilité du panneau d'habillage (accrues par la présence de la fente). Le déroulement et l'enroulement de la toile peuvent être perturbés, le mécanisme peut se détériorer ou se bloquer,... En d'autres termes, on rencontre des problèmes de fiabilité.

Par ailleurs, une autre technique est aujourd'hui mise en oeuvre pour le renforcement des portes. On a en effet proposé d'utiliser des profilés, ou poutres, par exemple en aluminium. Cette deuxième technique présente de nombreux avantages. En particulier, elle permet d'obtenir une réduction du poids et une meilleure efficacité.

Elle permet en outre une construction plus modulaire des véhicules (des structures modulaires soudées permettant de réaliser aisément plusieurs types de véhicules à partir d'une même base, et donc de rendre plus facile et plus rentable la production de véhicules en petite quantité), avec moins d'outillage que les techniques classiques.

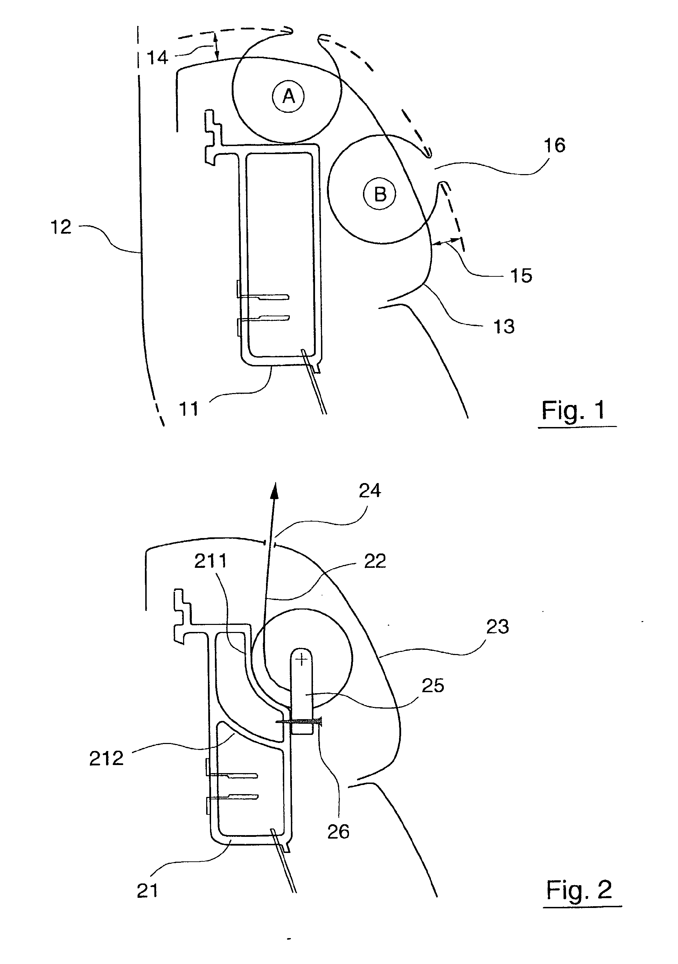

En revanche, ces profilés présentent un encombrement important, qui ne permet pas une installation aisée et efficace d'un store. La figure 1 illustre, en coupe, une position de porte équipée d'un tel profilé 11, dans l'espace défini par le panneau extérieur de carrosserie 12 et le panneau intérieur d'habillage 13. Deux possibilités sont alors envisageables pour installer un store, par exemple sous la forme d'une cassette pincée, mais aucune ne s'avère satisfaisante, puisqu'elle suppose une augmentation du volume (illustrée en pointillés) :
- au-dessus du profilé 11 (cassette A), ce qui suppose de surélever le panneau intérieur d'autant (flèche 14), et donc de réduire le volume intérieur et la surface vitrée, et de nuire à l'ergonomie et à l'esthétique ;
- à côté du profilé 11 (cassette B), ce qui entraîne une augmentation de l'épaisseur de la porte (flèche 15), et donc une réduction de la largeur aux coudes.

En outre, dans ce dernier cas, la fente 16 est mal placée, par rapport au déploiement de la toile, qui frotte en permanence contre elle.

Ces solutions ne sont donc clairement pas souhaitables. En outre, elles conservent les inconvénients de fragilité déjà mentionnés.

L'invention a notamment pour objectif de pallier ces inconvénients de l'art antérieur.

Plus précisément, un objectif de l'invention est de fournir une technique permettant de mettre en oeuvre de façon efficace un store dans une portière dont les éléments de structure comprennent un élément profilé, sans qu'il soit nécessaire d'augmenter le volume de la porte. L'habitabilité est aujourd'hui un aspect essentiel pour les constructeurs automobiles, et un critère important de choix pour les clients. En conséquence, le gain de volume aux coudes et aux épaules est un élément déterminant des études d'architecture de portes.

Un autre objectif de l'invention est de fournir une telle technique, qui permette d'améliorer la fiabilité des stores, et notamment de limiter les détériorations dues à la souplesse du panneau intérieur.

Selon un autre aspect de l'invention, un objectif est de fournir une telle technique, qui permette de renforcer ce panneau intérieur, au niveau de la fente et/ou de sa forme. En effet, la partie haute du panneau de porte doit rester très rigide, notamment du fait qu'elle comporte la clé de montage qui assemble le panneau avec la structure de la porte et le joint à lèvre. De façon classique, cet assemblage est réalisée à force (en frappant fortement sur le dessus du panneau), ce qui peut poser des problèmes si l'ensemble n'est pas suffisamment rigide.

Encore un autre objectif de l'invention est de fournir une telle technique, qui permette une fabrication aisée, peu coûteuse et modulaire des portes, et un montage simple et efficace des stores les équipant.

L'invention a également pour objectif de fournir une telle technique, qui permette d'obtenir des portes et des stores esthétiques et ergonomiques.

Ces objectifs, ainsi que d'autres qui apparaîtront par la suite sont atteints à l'aide d'un élément profilé présentant une section adaptée pour recevoir un store d'occultation, destiné à occulter sélectivement une vitre montée dans ladite partie supérieure.

Ainsi, il n'est pas nécessaire d'adapter, et notamment d'augmenter, le volume de la porte. Au contraire, c'est le profilé qui s'adapte aux contraintes imposées par le store.

Selon l'invention, le store est donc monté sur, ou dans, le profilé et non sur un autre élément, et en particulier sur l'habillage. On confère donc au profilé une seconde fonction (support de store), la première fonction étant bien sûr le renforcement et la rigidification de la porte. Cela permet en outre d'augmenter la fiabilité du store, qui est solidaire du profilé et non d'un panneau peu rigide, tout en permettant un montage aisé et peu coûteux.

Selon un premier mode de réalisation avantageux de l'invention, ledit store comprend deux paliers sur lesquels est monté un tube enrouleur, lesdits paliers étant fixés audit élément profilé.

On obtient ainsi un système efficace et à coût réduit, qui permet de s'affranchir de la présence d'un boîtier de store.

Selon un deuxième mode de réalisation particulier, ledit store comprend un boîtier dans lequel est monté un tube enrouleur. Dans ce cas, ledit boîtier est avantageusement fixé audit élément profilé.

Dans le premier et le deuxième modes de réalisation, on tire avantage de la rigidité du profilé, pour fournir un système beaucoup plus fiable dans le temps que les systèmes connus.

Selon un troisième mode de réalisation préférentiel, encore plus intégré, ledit élément profilé définit un logement dans lequel est monté ledit store.

Le store peut alors être mis directement en place dans le profilé, sans qu'il soit nécessaire de le rapporter et de le fixer comme exposé précédemment.

Selon une caractéristique avantageuse de l'invention, ledit profilé comprend au moins une portion de rigidification, contre laquelle ledit panneau intérieur d'habillage vient en appui.

On attribue ainsi une troisième fonction au profilé, qui, tout en restant un élément relativement simple à produire, permet de produire des portes répondant simultanément à plusieurs exigences (simplicité et faible poids de la structure, volume réduit de la porte, rigidité du panneau intérieur).

Ainsi, avantageusement, une première portion de rigidification s'étend au niveau d'une partie sensiblement horizontale correspondant à ladite ligne de caisse du panneau intérieur d'habillage.

Cette première portion est utile en particulier lors de l'assemblage de la clé avec le joint lécheur, qui se fait à force. Elle permet d'éviter notamment la détérioration de la partie supérieure du panneau intérieur.

De façon préférentielle, ladite première portion de rigidification présente une section en « Z » ou en « S ». Cela permet de définir une surface sensiblement horizontale, sur laquelle prend appui la partie supérieure du panneau intérieur.

Selon une caractéristique avantageuse de l'invention, ladite première portion de rigidification s'étend au niveau d'un des bords d'une fente ménagée dans ledit panneau intérieur d'habillage.

Il s'agit en effet d'une partie fragilisée par la présence de la fente. La présence de la portion de rigidification permet de conserver ne bonne rigidité, malgré la fente.

Par ailleurs, le profilé comprend avantageusement une portion de rigidification (dite deuxième portion, bien qu'elle puisse être mise en oeuvre indépendamment de la présence d'une « première » portion telle que décrite ci-dessus), qui s'étend au niveau d'une partie galbée supérieure dudit panneau intérieur d'habillage.

De façon avantageuse, ladite deuxième portion de rigidification coïncide avec une portion dudit logement formé dans le profilé pour recevoir le store. Cela permet d'éviter les détériorations et déformations du panneau intérieur, dues par exemple à un coup de coude.

Préférentiellement, l'extrémité de ladite deuxième portion de rigidification s'étend au niveau d'un des bords d'une fente ménagée dans ledit panneau intérieur d'habillage. Comme déjà exposé, cela permet de renforcer efficacement le bord de fente.

Selon un aspect avantageux de l'invention, la porte comprend un enjoliveur destiné à être monté sur ladite fente, et qui solidarise ledit bord de fente et ladite première et/ou de ladite deuxième portions de rigidification.

Ainsi, outre sa fonction esthétique, l'enjoliveur joint le panneau intérieur, au niveau de la fente, au profilé, ce qui augmente encore la rigidité et l'efficacité du montage.

Avantageusement, ledit enjoliveur est conçu pour s'adapter à une forme concave et/ou convexe dudit bord de fente.

De façon préférentielle, ledit élément profilé présente un prolongement définissant une mâchoire destinée à chevaucher au moins une partie d'au moins un des bords d'une fente ménagée dans ledit panneau intérieur d'habillage.

Selon un mode de réalisation avantageux, la porte de l'invention comprend un enjoliveur rigide, rapporté sur ladite mâchoire.

Notamment, le bord de la fente proche de la vitre peut ainsi être associé à une telle mâchoire, car il est souvent rectiligne, alors que l'autre bord, qui suit le galbe du panneau intérieur, sera équipé d'un enjoliveur plus souple.

Selon une caractéristique particulière de l'invention, ledit élément profilé comprend encore une extension destinée à coopérer un joint lécheur de vitre. Celui-ci pourra ainsi être monté sur le profilé, prêt à être assemblé avec la clé du panneau intérieur.

Selon une autre caractéristique avantageuse de l'invention, ledit élément profilé comprend au moins une aile interne de renfort, dont la section tient compte au moins en partie à la section adaptée pour recevoir ledit store d'occultation.

Ledit élément profilé peut notamment être réalisé en aluminium extrudé, en acier galeté ou par éléments emboutis soudés.

L'invention concerne également les éléments profilés destinés à équiper une porte pour véhicule automobile telle que décrite ci-dessus, ainsi que les stores d'occultation destiné à coopérer avec un tel élément profilé, et les enjoliveurs destiné à être monté sur une fente de passage d'une toile d'occultation, dans une telle porte.

L'invention concerne encore les véhicules automobiles comprenant au moins une porte telle que décrite ci-dessus.

D'autres caractéristiques et avantages de l'invention apparaîtront plus clairement à la lecture de la description suivante de trois modes de réalisation préférentiels, donnés à titre de simples exemples illustratifs et non limitatifs, et des dessins annexés parmi lesquels :
- la figure 1, déjà commentée en préambule, illustre la difficulté de monter un store dans un portière équipée d'un profilé, selon l'art antérieur ;
- la figure 2 illustre un premier mode de réalisation de l'invention, dans lequel les paliers du store sont rapportés sur le profilés ;
- la figure 3 présente un deuxième mode de réalisation, dans lequel le profilé définit un logement pour le store ;
- la figure 4 illustre le caractère évolutif et adaptable du mode de réalisation de la figure 3 ;
- la figure 5 présente un troisième mode de réalisation, dans lequel le profilé comprend en outre une portion venant prendre l'un des lèvres de la fente.

Comme déjà mentionné, l'invention concerne les portes pour véhicules automobiles, dont la structure comprend un profilé et qui intègrent un store d'occultation. L'invention repose notamment sur une double innovation :
- le store est monté, sur ou dans le profilé et non sur un autre élément, et en particulier sur l'habillage. On confère donc au profilé une seconde fonction (support de store), la première fonction étant le renforcement et la rigidification de la porte ;
- le profilé a une forme adaptée pour coopérer avec le store, sans qu'il soit nécessaire d'augmenter le volume de la porte.

Ainsi, sur la figure 2, qui illustre un premier mode de réalisation de l'invention, on constate que la section du profilé 21 n'est pas classiquement rectangulaire (comme celle illustrée en figure 1), mais qu'elle présente une partie 211 formant sensiblement un arc de cercle, dans lequel la toile 22 vient en partie (sensiblement la moitié) se loger.

En conséquence, la toile 22, lorsqu'elle est enroulée, dépasse d'une épaisseur réduite, et il n'est pas nécessaire de modifier la forme de l'habillage intérieur 23. On conserve ainsi l'intégralité du clair de baie et une bonne largeur aux coudes, tout en offrant un store :
- fiable, puisqu'il est solidaire du profilé 21, et non de l'habillage ;
- efficace, puisqu'il permet de placer la fente 24 sur la partie supérieure de l'habillage 23 ;
- peu coûteux, puisqu'il ne nécessite pas de boîtier ou de cassette de store, et que la modification de la section du profilé n'induit pas de surcoût particulier.

En outre, le montage du store est très simple. La toile 22 est montée sur un tube enrouleur (non représenté) monté lui-même sur deux paliers 25 d'extrémité, qui sont simplement fixés au profilé 21, par au moins une vis 26, ou selon toute autre technique adéquate (rivets, clipage, collage, soudage,...).

Le profilé 21 comprend au moins une aile de renfort 212, dont la forme suit celle en arc de cercle 211.

Bien sûr, l'adaptation de la section du profilé 21 n'est pas forcément en arc de cercle. Elle peut par exemple former un biseau. Par ailleurs, bien qu'il soit économiquement avantageux de pouvoir se passer d'une cassette, on peut choisir de placer le store dans un boîtier, qui est lui-même fixé au profilé 21, et donc la forme coïncide avec celle du profilé.

Selon cette approche, le store peut ainsi être livré directement avec la structure de la porte (et non avec le panneau, qui est souple).

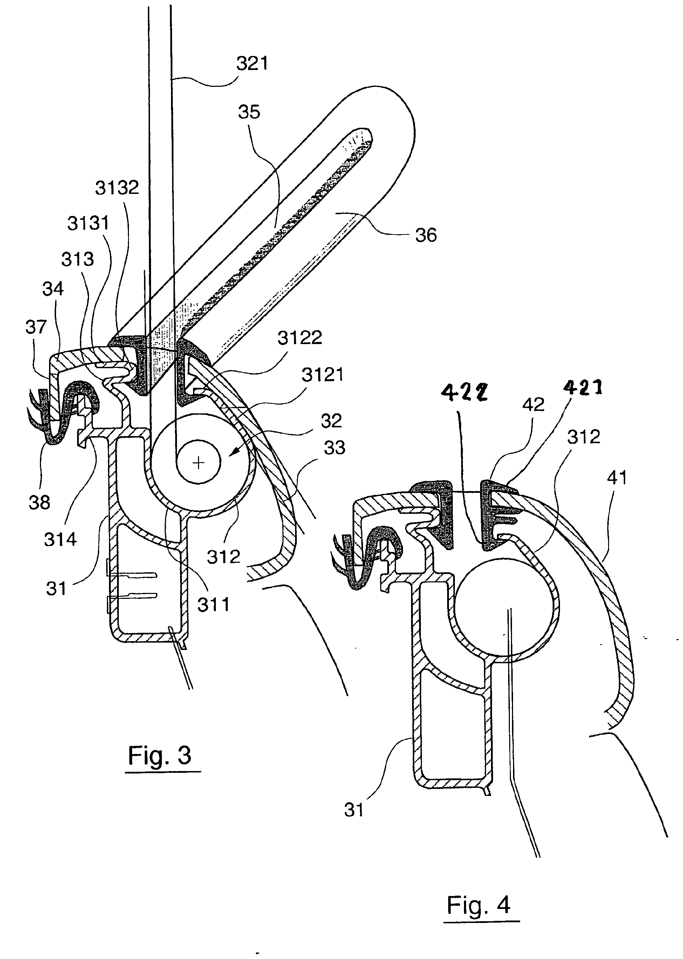

Dans un autre mode de réalisation, illustré en figure 3, le store est complètement intégré dans le profilé 31, et non plus fixé à celui-ci. Il s'agit donc d'un mode de réalisation complètement intégré.

La portion en arc de cercle 311 se prolonge par une aile 312, de façon que l'ensemble définisse un logement dans lequel le store 32 peut être monté. Ce logement correspond donc à une cassette classique, et peut recevoir de la même façon qu'une telle cassette classique, des paliers et un tube enrouleur.

L'aile 312 présente une portion 3121 dont la surface coïncide avec celle de l'habillage 33, de façon à renforcer ce dernier. Il est ainsi beaucoup moins sensible aux déformations (par exemple lorsqu'un coude appuie dessus), aux vibrations,...

Dans un but semblable, le profilé 31 présente également un prolongement 313 s'étendant jusqu'à la partie supérieure 34 de l'habillage. Il se termine par une surface 3131 qui coïncide avec cette partie supérieure 34. La section de l'extrémité de ce prolongement 313 définit sensiblement un « Z », ou un « S » :

Le profilé 31 a ainsi une troisième fonction d'interface, avec le panneau intérieur et de rigidification de celui-ci.

Cette fonction est importante. En effet, pour assembler la clé 37 du panneau dans le joint lécheur 38 (préalablement mis en place sur l'extension 314 du profilé 31), on appuie et/ou on frappe fortement (par exemple à coups de poing) sur la partie supérieure du panneau intérieur. La présence du prolongement 313 de rigidification empêche la déformation et la détérioration de ce panneau intérieur.

Par ailleurs, le bord 3132 du prolongement 313 d'une part, et l'extrémité 3122 de l'aile 312 d'autre part, se trouvent respectivement au niveau de chacun des bord de la fente 35 ménagée dans l'habillage 34 pour permettre le passage de la toile 321. Un enjoliveur 36, par exemple en matière plastique, est monté sur cette fente 35. Il assure notamment des fonctions esthétiques et de rigidification de la fente 35.

Cet enjoliveur 36 est conçu non seulement pour chevaucher les bords de la fente, mais également pour solidariser par pincement les bords de fente et les portions 3132 et 3122 du profilé. Ainsi, le panneau intérieur est rigidifié, malgré sa fragilité, accrue par la fente 35, puisqu'il est directement solidarisé au profilé 31.

Cette technique est donc très efficace, fiable et peu coûteuse à mettre en oeuvre. En outre, elle est évolutive, ainsi que l'illustre la figure 4.

Sur cette dernière, on utilise exactement le même profilé 31 que celui de la figure 3, dans une porte dont le panneau 41 est plus haut. De ce fait, la partie droite 42 de l'enjoliveur est sensiblement différente, et adaptable pour solidariser le panneau 41 et le profilé 31, par exemple avec deux mâchoires 421 et 422, adaptées respectivement au panneau d'habillage 41 et à l'extrémité 3122.

Cette approche permet également d'adapter la liaison panneau/profilé lorsque la forme de la partie supérieure du panneau n'est pas plane, et que celle de la fente n'est pas rectiligne. Dans ce cas, le panneau de porte peut s'éloigner ou se rapprocher du profilé. Le profil de l'enjoliveur peut varier en conséquence, par exemple pour passer de la section illustrée en figure 3 à celle illustrée en figure 4.

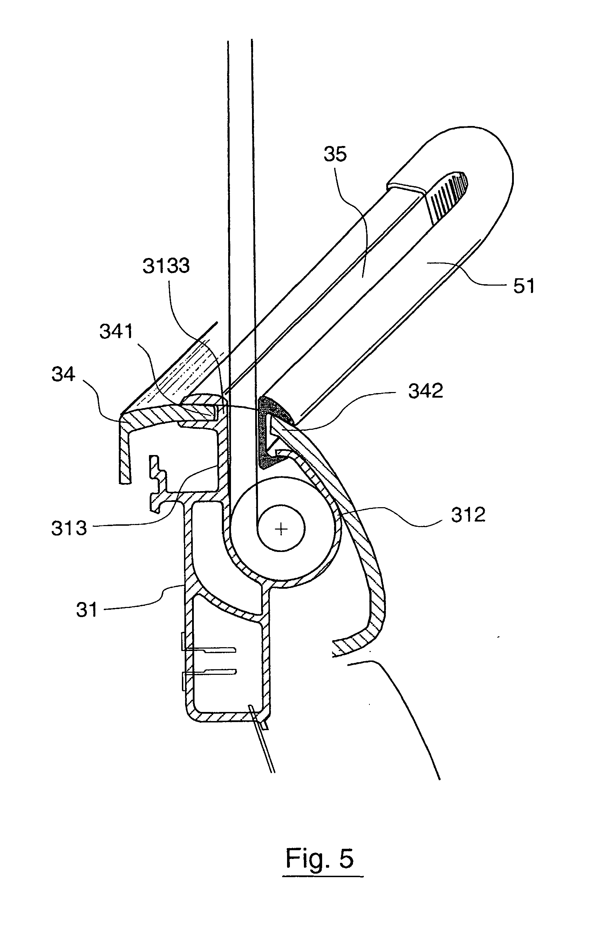

La figure 5 illustre un troisième mode de réalisation, dans lequel on retrouve l'aile 312 déjà décrite plus haut.

Selon ce mode de réalisation, le profilé 31 présente également un prolongement 313. Cependant, celui-ci se termine par une mâchoire 3133, qui vient directement chevaucher le bord 341 de la fente 35. On obtient ici une rigidification directe de la fente, et un aspect esthétique particulier, dû au profilé aluminium sur ce bord 341.

Cela est possible car le bord 341, proche de la vitre, est généralement rectiligne. En revanche, l'autre bord 342 peut être évolutif (non rectiligne) et suivre un arrondi du panneau. On prévoit donc ici un enjoliveur plastique 51, pour recouvrir ce bord 342, et le solidariser au profilé 31, selon le principe illustré en figure 3 et 4. Cet enjoliveur recouvre également les bords de la mâchoire 3133, et les extrémités de la fente.

## Revendications

1. Porte pour véhicule automobile, comprenant une partie supérieure et une partie inférieure présentant un panneau extérieur de carrosserie et un panneau intérieur d'habillage (34), et un élément profilé de renfort (21 ; 31) s'étendant à l'intérieur de ladite partie inférieure, sensiblement au niveau de la ligne de caisse de ladite porte,
**caractérisée en ce que** ledit élément profilé de renfort (21 ; 31) présente une section adaptée pour recevoir un store d'occultation (22 ; 32), destiné à occulter sélectivement une vitre montée dans ladite partie supérieure.

2. Porte pour véhicule automobile selon la revendication 1, **caractérisée en ce que** ledit store (22) comprend deux paliers (25) sur lesquels est monté un tube enrouleur, et **en ce que** lesdits paliers sont fixés audit élément profilé de renfort.

3. Porte pour véhicule automobile selon la revendication 1, **caractérisée en ce que** ledit store comprend un boîtier dans lequel est monté un tube enrouleur, et **en ce que** ledit boîtier est fixé audit élément profilé de renfort.

4. Porte pour véhicule automobile selon la revendication 1, **caractérisée en ce que** ledit élément profilé de renfort (31) définit un logement dans lequel est monté ledit store (32).

5. Porte pour véhicule automobile selon l'une quelconque des revendications 1 à 4, **caractérisée en ce que** ledit élément profilé de renfort (31) comprend au moins une portion de rigidification (313, 3121), contre laquelle ledit panneau intérieur d'habillage (34) vient en appui.

6. Porte pour véhicule automobile selon la revendication 5, **caractérisée en ce qu**'une première portion de rigidification (313) s'étend au niveau d'une partie sensiblement horizontale correspondant à ladite ligne de caisse du panneau intérieur d'habillage (34).

7. Porte pour véhicule automobile selon la revendication 6, **caractérisée en ce que** ladite première portion de rigidification (313) présente une section en « Z » ou en « S ».

8. Porte pour véhicule automobile selon l'une quelconque des revendications 6 et 7, **caractérisée en ce que** ladite première portion de rigidification (313) s'étend au niveau d'un des bords d'une fente (35) ménagée dans ledit panneau intérieur d'habillage (34).

9. Porte pour véhicule automobile selon l'une quelconque des revendications 5 à 8, **caractérisée en ce qu**'une deuxième portion de rigidification (3121) s'étend au niveau d'une partie galbée supérieure dudit panneau intérieur d'habillage (34).

10. Porte pour véhicule automobile selon les revendications 4 et 9, **caractérisée en ce que** ladite deuxième portion de rigidification (3121) coïncide avec une portion dudit logement.

11. Porte pour véhicule automobile selon l'une quelconque des revendications 9 et 10, **caractérisée en ce que** l'extrémité (3122) de ladite deuxième portion de rigidification (3121) s'étend au niveau d'un des bords d'une fente (35) ménagée dans ledit panneau intérieur d'habillage (34).

12. Porte pour véhicule automobile selon la revendication 8 et/ou la revendication 11, **caractérisée en ce qu**'elle comprend un enjoliveur (36) destiné à être monté sur ladite fente (35), et solidarisant ledit bord de fente et ladite première et/ou de ladite deuxième portions de rigidification.

13. Porte pour véhicule automobile selon la revendication 12, **caractérisée en ce que** ledit enjoliveur (36 ; 42) est conçu pour s'adapter à une forme concave et/ou convexe dudit bord de fente.

14. Porte pour véhicule automobile selon l'une quelconque des revendications 1 à 13, **caractérisée en ce que** ledit élément profilé de renfort (31) présente un prolongement définissant une mâchoire (3133) destinée à chevaucher au moins une partie d'au moins un des bords (341) d'une fente (35) ménagée dans ledit panneau intérieur d'habillage.

15. Porte pour véhicule automobile selon la revendication 14, **caractérisée en ce qu**'elle comprend un enjoliveur rigide, rapporté sur ladite mâchoire.

16. Porte pour véhicule automobile selon l'une quelconque des revendications 1 à 15, **caractérisée en ce que** ledit élément profilé de renfort (31) comprend au moins une aile interne de renfort (212), dont la section tient compte au moins en partie à la section adaptée pour recevoir ledit store d'occultation.

17. Porte pour véhicule automobile selon l'une quelconque des revendications 1 à 16, **caractérisée en ce que** ledit élément profilé de renfort comprend une extension (314) destinée à coopérer avec un joint lécheur de vitre (38).

18. Porte pour véhicule automobile selon l'une quelconque des revendications 1 à 17, **caractérisée en ce que** ledit élément profilé de renfort (31) est réalisé en aluminium extrudé, en acier gaieté ou par éléments emboutis soudés.

19. élément profilé de renfort (31) destiné à équiper une porte pour véhicule automobile selon l'une quelconque des revendications 1 à 18.

20. Store d'occultation destiné à coopérer avec un élément profilé de renfort, dans une porte pour véhicule automobile selon l'une quelconque des revendications 1 à 18.

21. Enjoliveur (36) destiné à être monté sur une fente de passage d'une toile d'occultation, dans une porte pour véhicule automobile selon l'une quelconque des revendications 1 à 18.

22. Véhicule automobile, comprenant au moins une porte selon l'une quelconque des revendications 1 à 18.

## Claims

1. Motor vehicle door, comprising an upper part and a lower part having an exterior bodywork panel and an interior trim panel (34), and a reinforcing profile element (21; 31) extending inside the said lower part, substantially at the level of the body line of the said door,
**characterised in that** the said reinforcing profile element (21; 31) has a section adapted to receive a shading blind (22; 32), intended to shade selectively a window mounted in the said upper part.

2. Motor vehicle door according to Claim 1, **characterised in that** the said blind (22) comprises two bearings (25) on which a winding tube is mounted, and **in that** the said bearings are fixed to the said reinforcing profile element.

3. Motor vehicle door according to Claim 1, **characterised in that** the said blind comprises a housing in which a winding tube is mounted, and **in that** the said housing is fixed to the said reinforcing profile element.

4. Motor vehicle door according to Claim 1, **characterised in that** the said reinforcing profile element (31) defines a receptacle in which the said blind (32) is mounted.

5. Motor vehicle door according to any one of Claims 1 to 4, **characterised in that** the said reinforcing profile element (31) comprises at least one stiffening portion (313, 3121), against which the said interior trim panel (34) bears.

6. Motor vehicle door according to Claim 5, **characterised in that** a first stiffening portion (313) extends at the level of a substantially horizontal part corresponding to the said body line of the interior trim panel (34).

7. Motor vehicle door according to Claim 6, **characterised in that** the said first stiffening portion (313) has a "Z"-shaped or "S"-shaped section.

8. Motor vehicle door according to either one of Claims 6 and 7, **characterised in that** the said first stiffening portion (313) extends at the level of one of the edges of a slot (35) made in the said interior trim panel (34).

9. Motor vehicle door according to any one of Claims 5 to 8, **characterised in that** a second stiffening portion (3121) extends at the level of an upper curved part of the said interior trim panel (34).

10. Motor vehicle door according to Claims 4 and 9, **characterised in that** the said second stiffening portion (3121) coincides with a portion of the said receptacle.

11. Motor vehicle door according to either one of Claims 9 and 10, **characterised in that** the end (3122) of the said second stiffening portion (3121) extends at the level of one of the edges of a slot (35) made in the said interior trim panel (34).

12. Motor vehicle door according to Claim 8 and/or Claim 11, **characterised in that** it comprises a decorative strip (36) intended to be mounted on the said slot (35), and joining the said slot edge and the said first and/or the said second stiffening portion.

13. Motor vehicle door according to Claim 12, **characterised in that** the said decorative strip (36; 42) is designed to adapt to a concave and/or convex shape of the said slot edge.

14. Motor vehicle door according to any one of Claims 1 to 13, **characterised in that** the said reinforcing profile element (31) has a prolongation defining a jaw (3133) intended to straddle at least part of at least one of the edges (341) of a slot (35) made in the said interior trim panel.

15. Motor vehicle door according to Claim 14, **characterised in that** it comprises a sill moulding attached to the said jaw.

16. Motor vehicle door according to any one of Claims 1 to 15, **characterised in that** the said reinforcing profile element (31) comprises at least one reinforcing inner flange (212), the section of which takes account at least partly of the section adapted to receive the said shading blind.

17. Motor vehicle door according to any one of Claims 1 to 16, **characterised in that** the said reinforcing profile element comprises an extension (314) intended to cooperate with a window sealing strip (38).

18. Motor vehicle door according to any one of Claims 1 to 17, **characterised in that** the said reinforcing profile element (31) is produced from extruded aluminium, rolled steel or welded stamped elements.

19. Reinforcing profile element (31) intended to equip a motor vehicle door according to any one of Claims 1 to 18.

20. Shading blind intended to cooperate with a reinforcing profile element, in a motor vehicle door according to any one of Claims 1 to 18.

21. Sill moulding (36) intended to be mounted on a slot for the passage of a shading cloth, in a motor vehicle door according to any one of Claims 1 to 18.

22. Motor vehicle, comprising at least one door according to any one of Claims 1 to 18.

## Patentansprüche

1. Kraftfahrzeugtür mit einem oberen und einem unteren Teil, die jeweils ein äußeres Karosseriepaneel und ein inneres Verkleidungspaneel (34) sowie ein sich innerhalb des unteren Teils, in etwa auf der Höhe der Kastenlinie der Fahrzeugtür erstreckendes Verstärkungsprofilelement (21; 31) aufweisen,
**dadurch gekennzeichnet, dass** dieses Verstärkungsprofilelement (21; 31) einen Abschnitt aufweist, der so ausgebildet ist, dass er ein Verdeckungsrollo (22; 32) aufnehmen kann, das in selektiver Weise eine in dem oberen Teil angebrachte Glasscheibe zu verdecken vermag.

2. Kraftfahrzeugtür nach Anspruch 1,
**dadurch gekennzeichnet, dass** das Rollo (22) zwei Lager (25) aufweist, auf welche eine Aufrollwalze montiert ist und, dass diese Lager an dem Verstärkungsprofilelement befestigt sind.

3. Kraftfahrzeugtür nach Anspruch 1,
**dadurch gekennzeichnet, dass** das Rollo ein Gehäuse aufweist, in dem eine Aufrollwalze angebracht ist und, dass dieses Gehäuse an das Verstärkungsprofilelement befestigt ist.

4. Kraftfahrzeugtür nach Anspruch 1,
**dadurch gekennzeichnet, dass** das Verstärkungsprofilelement (31) ein Gehäuse abgrenzt, in dem das Rollo (32) montiert ist.

5. Kraftfahrzeugtür nach einem der Ansprüche 1 bis 4,
**dadurch gekennzeichnet, dass** das Verstärkungsprofilelement (31) mindestens einen Versteifungsabschnitt (313, 3121) aufweist, gegen welchen sich das innere Verkleidungspaneel (34) abstützt.

6. Kraftfahrzeugtür nach Anspruch 5,
**dadurch gekennzeichnet, dass** ein erster Versteifungsabschnitt (313) sich auf der Höhe eines etwa horizontalen Teils erstreckt, welches der Kastenlinie des inneren Verkleidungspaneels (34) entspricht.

7. Kraftfahrzeugtür nach Anspruch 6,
**dadurch gekennzeichnet, dass** der erste Versteifungsabschnitt (313) einen Querschnitt in "Z"- oder "S"-Form aufweist.

8. Kraftfahrzeugtür nach einem der Ansprüche 6 oder 7,
**dadurch gekennzeichnet, dass** der erste Versteifungsabschnitt (313) sich auf der Höhe einer der Ränder eines in dem inneren Verkleidungspaneel praktizierten Schlitzes (35) erstreckt.

9. Kraftfahrzeugtür nach einem der Ansprüche 5 bis 8,
**dadurch gekennzeichnet, dass** ein zweiter Versteifungsabschnitt (3121) sich auf der Höhe eines oberen, gewölbten Teils des inneren Verkleidungspaneels (34) erstreckt.

10. Kraftfahrzeugtür nach einem der Ansprüche 4 oder 9,
**dadurch gekennzeichnet, dass** der zweite Versteifungsabschnitt (3121) mit einem Teil des Gehäuses übereinstimmt.

11. Kraftfahrzeugtür nach einem der Ansprüche 9 oder 10,
**dadurch gekennzeichnet, dass** das Ende (3122) des besagten zweiten Versteifungsabschnitts (3121) sich auf der Höhe einer der Ränder eines im inneren Verkleidungspaneel praktizierten Schlitzes (35) erstreckt.

12. Kraftfahrzeugtür nach Anspruch 8 und/oder Anspruch 11,
**dadurch gekennzeichnet, dass** sie eine Radkappe (36) aufweist, welche in den Schlitz (35) montiert werden soll und den Rand des Schlitzes und den ersten und/oder zweiten Versteifungsabschnitt miteinander verbindet.

13. Kraftfahrzeugtür nach Anspruch 12,
**dadurch gekennzeichnet, dass** die Radkappe (36; 42) so montiert ist, dass sie sich einer konkav und/oder konvex Form des besagten Schlitzrandes anpasst.

14. Kraftfahrzeugtür nach einem der Ansprüche 1 bis 13,
**dadurch gekennzeichnet, dass** die Verstärkungsprofilelemente (31) eine Verlängerung aufweisen, welche eine Backe (3133) bildet, die zumindest einen Teil einer der Ränder (341) eines in dem inneren Verkleidungspaneel praktizierten Schlitzes (35) überdecken soll.

15. Kraftfahrzeugtür nach Anspruch 14,
**dadurch gekennzeichnet, dass** sie eine starre, auf der besagten Backe aufgesetzte Radkappe aufweist.

16. Kraftfahrzeugtür nach einem der Ansprüche 1 bis 15,
**dadurch gekennzeichnet, dass** das besagte Verstärkungsprofilelement (31) mindestens einen inneren Verstärkungsflügel (212) aufweist, dessen Querschnitt zumindest teilweise den zur Aufnahme des Rollos angepassten Abschnitts berücksichtigt.

17. Kraftfahrzeugtür nach einem der Ansprüche 1 bis 16,
**dadurch gekennzeichnet, dass** das Verstärkungsprofilelement eine Verlängerung (314) aufweist, welche mit einer Dichtung (38) zusammenwirken soll, welche an der Glasscheibe streift.

18. Kraftfahrzeugtür nach einem der Ansprüche 1 bis 17,
**dadurch gekennzeichnet, dass** das besagte Verstärkungsprofilelement (31) aus stranggepresstem Aluminium, aus prägepoliertem Stahl oder aus gestanzten und zusammengeschweißten Elementen gebildet ist.

19. Verstärkungsprofilelement (31) zum Einbau in eine Kraftfahrzeugtür nach einem der Ansprüche 1 bis 18.

20. Rollo, das mit einem Verstärkungsprofilelement in einer Kraftfahrzeugtür nach einem der Ansprüche 1 bis 18 zusammenwirken soll.

21. Radkappe (36), die in einem Schlitz für den Durchgang einer Stoffbahn eines Rollos in einer Kraftfahrzeugtür nach einem der Ansprüche 1 bis 18 eingebaut werden soll.

22. Kraftfahrzeug, das mindestens eine Tür nach einem der Ansprüche 1 bis 18 aufweist.
